(19) **Europäisches Patentamt**
**European Patent Office**
**Office européen des brevets**

(11) **EP 1 896 281 B1**

(12) **FASCICULE DE BREVET EUROPEEN**

(45) Date de publication et mention
de la délivrance du brevet:
**24.03.2010 Bulletin 2010/12**

(21) Numéro de dépôt: **06778973.5**

(22) Date de dépôt: **23.06.2006**

(51) Int Cl.:
**B60K 20/00** *(2006.01)*

(86) Numéro de dépôt international:
**PCT/FR2006/050629**

(87) Numéro de publication internationale:
**WO 2007/000555 (04.01.2007 Gazette 2007/01)**

(54) **PROCEDE POUR PILOTER LE COUPLAGE ET LE DECOUPLAGE DU PREMIER MOTEUR ET DU DEUXIEME MOTEUR D' UN GROUPE MOTOPROPULSEUR HYBRIDE PARALLELE**

VERFAHREN ZUR STEUERUNG DER KOPPLUNG ODER ENTKOPPLUNG DES ERSTEN UND DES ZWEITEN MOTORS EINES PARALLEL-HYBRIDMOTOR-ANTRIEBSAGGREGATS

METHOD FOR CONTROLLING THE COUPLING AND THE DECOUPLING OF THE FIRST MOTOR AND SECOND MOTOR OF A PARALLEL HYBRID MOTIVE POWER GROUP

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.06.2005 FR 0506514**

(43) Date de publication de la demande:
**12.03.2008 Bulletin 2008/11**

(73) Titulaire: **PEUGEOT CITROËN AUTOMOBILES S.A.**
**78140 Vélizy Villacoublay (FR)**

(72) Inventeurs:
• **LE NEINDRE, Yvan**
**F-75017 Paris (FR)**
• **ROCQ, Gaétan**
**F-78125 La Boissière Ecole (FR)**

(56) Documents cités:
**US-A- 5 735 770       US-A1- 2002 117 339
US-A1- 2003 109 357**

## Description

La présente invention est relative à un procédé pour piloter le couplage et le découplage du premier moteur et du deuxième moteur d'un groupe motopropulseur hybride parallèle, du type comprenant un premier moteur entraînant un arbre primaire en entrée d'une boîte de vitesses, un deuxième moteur et un moyen de couplage/découplage du deuxième moteur et du premier moteur, manoeuvrable entre une position d'ouverture et une position de fermeture, pour permettre un changement de rapport de la boîte de vitesses lorsque le groupe motopropulseur fonctionne en mode hybride.

On connaît des véhicules automobiles équipés de groupes motopropulseurs hybrides parallèles. Les groupes motopropulseurs hybrides parallèles sont des groupes motopropulseurs comprenant un premier moteur, en général électrique, et un deuxième moteur, en général thermique, pouvant être couplés ou découplés par l'intermédiaire d'un embrayage commandé, de façon à optimiser en permanence l'utilisation des différentes énergies à disposition.

Selon les conditions de fonctionnement du véhicule, ou bien on utilise le moteur électrique seul, ou bien on utilise le moteur électrique accouplé avec le moteur thermique, le moteur électrique pouvant fonctionner en mode récepteur d'énergie.

L'accouplement/désaccouplement (ou couplage/découplage) du moteur thermique et du moteur électrique se fait en utilisant l'embrayage commandé. Cet ensemble est piloté par des automates ou plus généralement des systèmes informatiques dédiés à chacun des composants : moteur thermique, embrayage, moteur électrique, supervisés par un ordinateur d'ensemble qui, en fonction des conditions de fonctionnement du véhicule, détermine le mode optimal de fonctionnement du groupe motopropulseur.

En outre, l'ordinateur de supervision donne régulièrement des instructions de changement de rapport des boîtes de vitesses. En effet, pour de tels groupes motopropulseurs, l'optimisation permanente de l'utilisation différentes sources d'énergie conduit à changer très fréquemment le rapport de la boîte de vitesses.

Pour effectuer les changements de rapport de boîte de vitesses, l'ordinateur de supervision donne les instructions nécessaires au groupe motopropulseur pour permettre le changement de rapport de la boîte de vitesses dans les meilleures conditions.

En particulier, le changement de rapport de boîte de vitesses suppose trois phases, une première phase pendant laquelle le couple transmis à la boîte de vitesses est réduit jusqu'à ce que ce couple soit nul, c'est la phase d'annulation, puis une phase de synchronisation pendant laquelle le rapport de la boîte de vitesses est changé, puis une troisième phase dite de reprise qui est une phase pendant laquelle le groupe moteur est remis en puissance pour ré-entraîner les roues du véhicule.

Afin de respecter des contraintes d'agrément longitudinal, c'est-à-dire éviter des irrégularités dans la vitesse ou dans l'accélération du véhicule, il est nécessaire de réduire au maximum le temps de rupture de couple à la roue (c'est le temps pendant lequel le couple est annulé) qui correspond à la phase de synchronisation des régimes. Or, l'inertie des moteurs est très élevée, en particulier celle du moteur thermique, et cette inertie ne permet pas a priori de respecter les temps de synchronisation qui sont demandés par les utilisateurs. Cette incompatibilité intervient essentiellement lorsque le groupe moteur fonctionne en mode hybride, c'est-à-dire lorsque le moteur thermique et le moteur électrique sont couplés, en particulier parce que l'inertie du moteur thermique est très élevée.

Afin de pouvoir changer un rapport de vitesses dans des conditions satisfaisantes, lorsque le groupe moteur fonctionne en mode hybride, il est nécessaire de découpler le moteur thermique du moteur électrique pendant la phase d'annulation puis de le coupler à nouveau pendant la phase de reprise. Cependant, les consignes de commande utilisées pour assurer le découplage et le couplage des deux moteurs pendant les périodes de changement de rapport de la boîte de vitesses conduisent à des irrégularités longitudinales dans l'accélération ou la vitesse du véhicule qui conduisent à un inconfort pour les passagers.

L'état de la technique antérieure est indiqué par le document US 2003/0109357 qui décrit un tel dispositif.

Le but de la présente invention est de remédier à cet inconvénient en proposant un moyen pour piloter le découplage et le couplage des moteurs thermique et électrique d'un groupe moteur hybride de véhicule automobile lors du changement de rapport d'une boîte de vitesses, le moteur fonctionnant en mode hybride, qui conduise à une bonne régularité longitudinale du fonctionnement du véhicule.

A cet effet, l'invention a pour objet un procédé pour piloter le couplage et le découplage du premier moteur et du deuxième moteur d'un groupe motopropulseur hybride parallèle du type comprenant un premier moteur entraînant un arbre primaire en entrée d'une boîte de vitesses, un deuxième moteur et un moyen de couplage/découplage du deuxième moteur et du premier moteur, manoeuvrable entre une position d'ouverture et une position de fermeture, pour permettre un changement de rapport de la boîte de vitesses lorsque le groupe moteur fonctionne en mode hybride, selon lequel on pilote le groupe motopropulseur pour découpler le deuxième moteur et le premier moteur, puis changer le rapport de la boîte de vitesses, et coupler à nouveau le deuxième moteur et le premier moteur, en utilisant des lois de commande du groupe moteur de telle sorte que, lors du couplage et lors du découplage, la consigne de couple pour l'arbre primaire comporte une discontinuité choisie pour compenser l'écart entre l'inertie entraînée par l'arbre primaire lorsque le deuxième moteur est couplé au premier moteur et l'inertie entraînée par l'arbre primaire lorsque le deuxième moteur est découplé du premier moteur afin d'éviter toute variation brutale d'accélération de l'arbre primaire entraîné par le groupe moteur au moment du découplage ou du couplage.

On définit pour le groupe moteur, une consigne de couple de référence à transmettre à l'arbre primaire lorsque les deux moteurs sont couplés, et une consigne de couple de référence à transmettre à l'arbre primaire lorsque les deux moteurs sont découplés, on définit pour le groupe moteur, en fonction du couple résistant, auquel est soumis l'arbre primaire et des inerties qu'il doit entraîner lorsque les moteurs sont couplés et découplés, un couple de décélération naturel lorsque les moteurs sont couplés, et un couple de décélération naturel lorsque les moteurs sont découplés, on définit une première loi de passage assurant le passage entre le couple de référence à transmettre à l'arbre primaire lorsque les moteurs sont couplés, au couple de décélération naturel lorsque les moteurs sont couplés, pour le couplage, et inversement pour le découplage, on définit une deuxième loi assurant le passage entre le couple de référence à transmettre à l'arbre primaire lorsque les moteurs sont découplés, au couple de décélération naturel lorsque les moteurs sont découplés, pour le couplage, et inversement pour le découplage, et pendant le couplage ou le découplage, on pilote le groupe moteur pour transmettre à l'arbre primaire un couple qui suit la loi de passage correspondant au mode de fonctionnement de départ du groupe moteur jusqu'au moment où le mode de fonctionnement du groupe moteur change et on pilote alors le groupe moteur pour transmettre à l'arbre primaire un couple qui suit la loi de passage correspondant au mode de fonctionnement d'arrivée du groupe moteur.

De préférence, pour le découplage, le moment de changement de mode de fonctionnement du groupe moteur est la fin de l'ouverture des moyens de couplage/découplage, et, pour le couplage, le moment de changement du mode fonctionnement du groupe moteur est la fin de fermeture du moyen du couplage/découplage.

De préférence, en permanence, on pilote en couple le premier moteur; on pilote en couple le deuxième moteur lorsqu'il est couplé et on le pilote en régime lorsqu'il est découplé ou en cours de couplage, et on pilote en couple le moyen de couplage/découplage; de telle sorte que le couple transmis l'arbre primaire, égal à la somme du couple du premier moteur et du couple maximal transmissible par le moyen de couplage/découplage, lorsque le deuxième moteur n'est pas couplé ou du couple du deuxième moteur lorsque le deuxième moteur est couplé, soit égal à chaque instant à la consigne de couple pour l'arbre primaire défini pour le passage du couplage au découplage ou inversement.

De préférence, pour le découplage, pendant une première période pendant laquelle les deux moteurs sont couplés, on réduit la consigne de couple du premier moteur pour l'amener à la valeur correspondant au couple de décélération naturel lorsque les moteurs sont découplés, puis on maintient la consigne de couple pour le premier moteur et on démarre l'ouverture du moyen de couplage/découplage, on effectue l'ouverture du moyen de couplage/découplage, tout en pilotant le deuxième moteur pour que le couple transmis à l'arbre primaire suive la loi correspondant au couplage des moteurs.

De préférence, pour effectuer le couplage, on maintient la consigne de couple du premier moteur, on démarre la fermeture du moyen de couplage/découplage et on le ferme progressivement, simultanément, on pilote en régime le deuxième moteur pour assurer un accostage tangentiel du moyen de couplage/découplage, et, dès que l'accostage tangentiel est réalisé, on fait basculer la consigne de couple de l'arbre primaire de la loi correspondant aux moteurs découplés à la loi correspondant aux moteurs couplés, et on fait basculer le mode de pilotage du deuxième moteur, du mode de pilotage en régime au mode de pilotage en couple.

Par exemple, le premier moteur est une machine électrique, le deuxième moteur est un moteur thermique et le moyen de couplage/découplage est un embrayage commandé.

Le groupe moteur est, par exemple, un groupe motopropulseur hybride d'un véhicule automobile.

L'invention concerne également un groupe motopropulseur hybride comprenant un premier moteur, un deuxième moteur et un moyen de couplage/découplage comportant un moyen de pilotage mettant en oeuvre le procédé selon l'invention. Ce groupe motopropulseur entraîne, par exemple, la boîte de vitesse d'une automobile.

L'invention va maintenant être décrite de façon plus précise mais non limitative en-regard des figures annexées, dans desquelles :

- la figure 1 représente de façon schématique une chaîne de traction hybride simple en mode parallèle de la roue d'un véhicule automobile ;
- la figure 2 représente de façon schématique l'évolution du couple transmis à la roue en fonction du temps lors d'un changement de rapport de la boîte de vitesses ;
- la figure 3 représente de façon schématique les lois de commande utilisées pour piloter le groupe moteur lors de la première phase du changement de rapport de boîte de vitesses, c'est-à-dire pour assurer le découplage des deux moteurs du groupe moteur hybride ; et

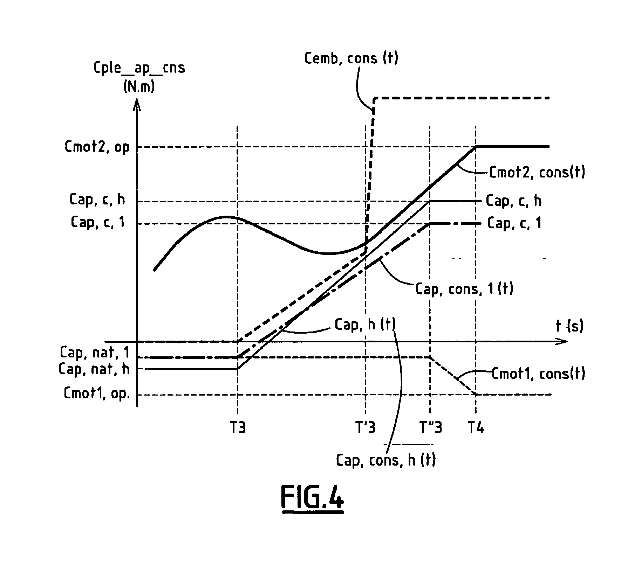

- la figure 4 est une représentation schématique de la loi de commande utilisée pour piloter le groupe moteur lors de la phase de reprise du changement de rapport de boîte de vitesses, c'est-à-dire pour assurer de nouveau le couplage des deux moteurs du groupe moteur hybride.

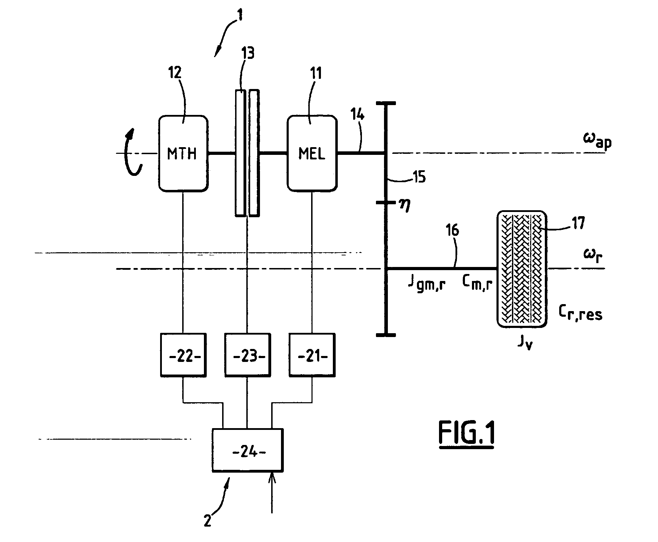

On va tout d'abord décrire la chaîne de traction hybride représentée à la figure 1. Cette chaîne de traction hybride comprend un groupe motopropulseur repéré généralement par 1 constitué d'un premier moteur 11 qui est un moteur électrique, ou plus généralement une machine électrique pouvant fonctionner aussi bien en moteur qu'en générateur, un deuxième moteur 12 qui est un moteur thermique, les deux moteurs électrique et thermique pouvant être accouplés par l'intermédiaire d'un moyen de couplage/découplage 13 qui est en général un embrayage commandé.

Ce groupe motopropulseur est piloté par un moyen de pilotage repéré généralement par 2 constitué d'un ordinateur de proximité 21 destiné à piloter le premier moteur 11, d'un deuxième ordinateur de proximité 22 destiné à piloter le deuxième moteur 12, d'un troisième ordinateur de proximité 23 destiné à piloter le moyen d'accouplement/désaccouplement 13, et d'un ordinateur de supervision 24 chargé de donner des instructions aux ordinateurs de proximité 21, 22 et 23, à partir de données relatives au fonctionnement du véhicule et du souhait du conducteur.

L'ordinateur 24 reçoit des informations et des instructions depuis différents capteurs situés sur le véhicule, de façon connue en elle-même de l'homme du métier.

Le groupe motopropulseur 1 entraîne un arbre primaire 14 qui est l'arbre d'entrée d'une boîte de vitesses 15, laquelle entraîne un arbre de sortie 16, lequel entraîne au moins une roue 17 du véhicule.

En fonctionnement, la roue 17 est soumise, d'une part, à un couple résistant et, d'autre part, à un couple moteur qui est le couple d'entraînement de l'arbre de sortie 16 de la boîte de vitesses, de telle sorte que l'accélération de l'ensemble mécanique est égale au rapport de la différence entre le couple moteur et le couple résistant divisé par le moment d'inertie vu par le système mécanique, c'est-à-dire par la somme des moments d'inertie des masses entraînées rapportées à l'axe 16.

Le fonctionnement du véhicule peut être également représenté en prenant comme référence les inerties qui sont vues par l'arbre primaire 14 d'entrée de la boîte de vitesses. Cet arbre primaire voit un couple résistant Cap,res, et l'inertie d'entraînement du véhicule Jap,v, il voit en outre des inerties qui sont dues aux inerties du groupe moteur Jap,m. Cette inertie du groupe correspondant au groupe moteur dépend du mode de fonctionnement du moteur selon qu'il fonctionne en mode hybride, c'est-à-dire que le premier moteur et le deuxième moteur sont couplés, ou bien selon qu'il fonctionne en mode simple, c'est-à-dire que seul le premier moteur, c'est-à-dire le moteur électrique, est accouplé à l'arbre primaire. Ce mode de fonctionnement correspond en fait à la situation dans laquelle le deuxième moteur, c'est-à-dire le moteur thermique est découplé du premier moteur. Si Jm1 est l'inertie du premier moteur et Jm2 l'inertie du deuxième moteur, lorsque le groupe moteur fonctionne en mode hybride, l'inertie des moteurs vue par l'arbre primaire est Jap,m = Jm1 + Jm2 lorsque les moteurs sont découplés, cette inertie est simplement Jap,m = Jm1.

Le couple d'entraînement des différents éléments qui sont disposés sur l'arbre primaire 14 dépend également du mode de fonctionnement du groupe moteur.

Dans tous les cas, l'arbre primaire 14 reçoit un couple moteur qui correspond au couple généré par le premier moteur, qui peut être soit un couple moteur soit un couple résistant et qu'on appelle Cmot1. L'arbre primaire 14 reçoit également un couple qui peut lui être transmis à travers le moyen de couplage/découplage 13 provenant du deuxième moteur 12. Ce couple est appelé Cemb. Il est à noter que le couple transmis par le moyen de couplage/découplage 13 dépend des conditions de fermeture ou d'ouverture de ce moyen de couplage/découplage. En effet, le moyen de couplage/découplage varie entre une position où il est complètement ouvert et dans laquelle il ne transmet aucun couple, à une position où il est complètement fermé et où il peut transmettre le couple maximum qu'il est susceptible de transmettre et qui peut correspondre au couple généré par le deuxième moteur. Dans cette situation, les vitesses de rotation des arbres en entrée et en sortie du moyen de couplage/découplage sont égales: les deux moteurs sont synchronisés. Le couple transmis par le moyen de couplage/découplage est alors égal à la différence entre le couple fourni par le deuxième moteur Cmot2, et le couple nécessaire pour assurer l'accélération ou la décélération de l'inertie correspondant à ce moteur. Soit, si $\omega$ est la vitesse de rotation du moteur et Cemb, le couple transmis par l'embrayage :

$$Cemb = Cmot2 - Jm2 \times d\omega/dt.$$

Lorsque le moyen de couplage/découplage est en cours de fermeture ou d'ouverture, le couple maximum qu'il peut transmettre dépend du degré d'ouverture et de fermeture. En outre, pendant cette phase et en particulier en cours de fermeture, le moyen de couplage/découplage peut être en mode glissant, c'est-à-dire que les vitesses de rotation du deuxième moteur et la vitesse de rotation du premier moteur, c'est-à-dire les vitesses de rotation des moteurs en entrée et en sortie du moyen de couplage/découplage peuvent être différentes. Lorsque le moyen de couplage/découplage fonctionne en mode glissant, le couple transmis par l'embrayage Cemb est égal au couple maximal transmissible compte tenu du degré d'ouverture ou de fermeture du moyen de couplage/découplage.

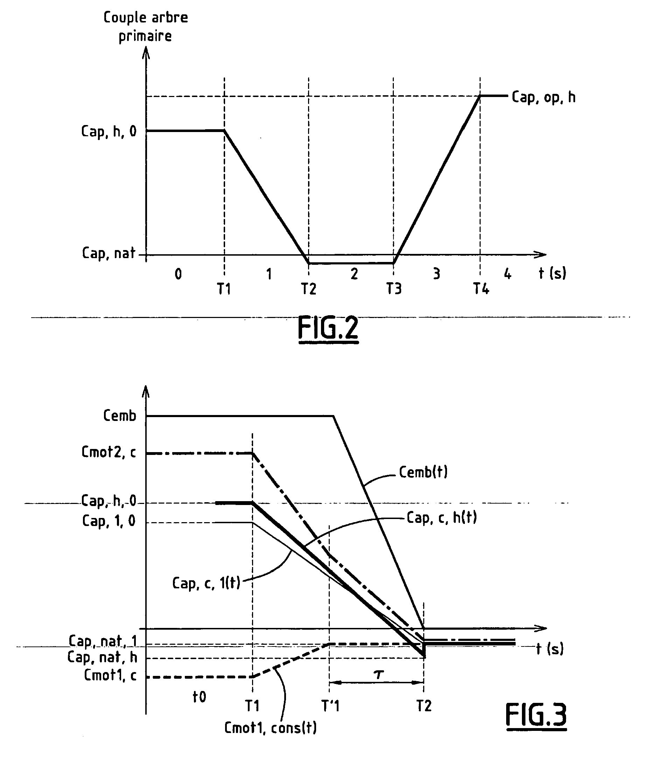

Avec un tel dispositif, pour assurer le changement de rapport de boîte de vitesses, on pilote l'ensemble, comme représenté à la figure 2, en partant d'une phase initiale 0 dans laquelle le couple fourni par le groupe moteur à l'arbre primaire 14 d'entrée de la boîte de vitesses est égal à Cap,h,0, c'est-à-dire un couple hybride initial.

Dès l'instant $T_1$ auquel on commence à changer de rapport de boîte de vitesses, on fait décroître le couple fourni à l'arbre primaire jusqu'à une valeur dite couple de décélération naturelle Cap,nat qui est le couple tel que le couple transmis par la boîte de vitesses est nul.

Ce couple est tel que la décélération du groupe moteur correspond, compte tenu du rapport de boîte de vitesses, à la décélération naturelle qu'aurait l'arbre 16 d'entraînement de la roue, si la boîte de vitesses ne transmettait aucun couple à la roue. Ce couple de décélération naturelle est atteint à l'instant $T_2$. Cette phase 1 est appelée annulation. Elle est suivie d'une période 2, appelée synchronisation, pendant laquelle on effectue le changement de vitesses. Pendant cette phase, on synchronise les pignons, on décrabote, on synchronise les pignons et on recrabote après avoir changé les rapports, et cette deuxième phase se termine à l'instant $T_3$. Après l'instant $T_3$ et jusqu'à l'instant $T_4$, on ré-accouple le groupe moteur à l'arbre d'entraînement des roues, et on fait remonter le couple transmis à l'arbre primaire jusqu'à la valeur qui était fixée par l'ordinateur de supervision qui correspond au couple optimal en mode hybride pour l'arbre primaire Cap,opt,h. Cette phase 3 est appelée reprise. Au-delà de l'instant $T_4$, le groupe moteur fonctionne en délivrant à l'arbre primaire le nouveau couple optimal qui vient d'être défini. Cette phase est repérée 4 sur la figure.

Pour assurer la décroissance du couple-appliqué à l'arbre primaire pendant la première phase 1 dite phase d'annulation, il est nécessaire, à un moment donné, de découpler le deuxième moteur du premier moteur. Ce découplage doit être effectué en suivant des consignes de variations des couples pour l'ensemble des composants du groupe moteur qui soient telles qu'on ne ressente aucune discontinuité dans les accélérations du véhicule. De même pendant la phase 3 dite phase de reprise, au moment où on augmente à nouveau le couple appliqué à l'arbre primaire, il est nécessaire de coupler à nouveau le deuxième moteur et le premier moteur en utilisant des lois de pilotage des ensembles de l'équipement du groupe moteur de telle sorte que le véhicule ne subisse aucune discontinuité de son accélération.

On va maintenant décrire les lois de pilotage des différents équipements du groupe moteur qui permettent de réaliser le découplage dans des conditions satisfaisantes.

D'abord on définit, pour la période qui précède le début du découplage, d'une part, une consigne de couple pour l'arbre primaire en mode hybride, initial Cap,c,h, qu'on appellera aussi consigne de référence en mode hybride, et une consigne de couple pour l'arbre primaire en mode découplé initial Cap,c,1, qu'on appellera aussi consigne de référence en mode découplé qui sont telles que ces deux consignes conduisent au même comportement du véhicule.

On détermine également les couples de décélération naturelle pour l'arbre primaire en mode hybride et en mode découplé Cap,nat,h et Cap,nat,1, qui sont les couples qui correspondent à un couple transmis par la boîte de vitesses nul. Si $J_1$ est l'inertie du premier moteur vue depuis l'arbre primaire, $J_2$ l'inertie du deuxième moteur vue depuis l'arbre primaire, $J_v$ l'inertie du véhicule vue depuis l'arbre d'entraînement de la roue, Crés le couple résistant auquel est soumise la roue et si $\eta$ est le

rapport de la boîte de vitesses, les couples de décélération naturelle de l'arbre primaire en mode hybride et mode découplé s'expriment par les relations suivantes :

- couple de décélération naturel en mode hybride :

$$\text{Cap,nat,h} = -\frac{1}{\eta} \times \frac{J_1+J_2}{J_v} \times \text{Cres.}$$

- couple de décélération naturelle en mode découplé :

$$\text{Cap,nat,1} = -\frac{1}{\eta} \frac{J_1}{J_v} \times \text{Cres.}$$

Une fois que ces quatre grandeurs sont déterminées, on définit deux rampes de variation de couples pour l'arbre primaire, une rampe qui correspond au mode de fonctionnement hybride, Cap,c,h(t), et une rampe correspondant au mode de fonctionnement découplé Cap,c,1(t) qui font passer, respectivement, du couple d'entraînement de l'arbre primaire en mode hybride initial au couple de décélération naturelle de l'arbre primaire en mode hybride, et du couple d'entraînement de l'arbre primaire en mode découplé à l'instant initial au couple de décélération naturelle de l'arbre primaire en mode découplé, entre un instant $T_1$ et un instant $T_2$, l'intervalle de temps de $T_1$ à $T_2$ étant supérieur à la durée $\tau$ d'ouverture du moyen de couplage/découplage.

On définit un instant $T'_1$ de début d'ouverture du moyen de couplage/découplage qui est tel que l'intervalle de temps entre $T'_1$ et $T_2$ est égal au temps $\tau$ d'ouverture du moyen de couplage/découplage. Une fois que l'instant $T'_1$ est défini, on donne au premier moteur une consigne de couple Cmot1,cons(t) qui le fait passer entre l'instant $T_1$ et l'instant $T'_1$ de la consigne de couple qu'il avait avant le début du processus d'ouverture à une consigne de couple qui est égale au couple naturel de décélération de l'arbre primaire en mode découplé Cap,nat,1. Puis on maintient la consigne de couple pour le premier moteur à la valeur de couple de décélération naturelle de l'arbre primaire en mode découplé pendant tout le processus d'ouverture du moyen de couplage/découplage et au-delà.

Pendant tout le processus de couplage/découplage, on ajuste la consigne pour le deuxième moteur Cmot2,cons(t) pour que la somme de la consigne de couple pour le moteur 1 et de la consigne pour le moteur 2 soit égale à la consigne de couple pour l'arbre primaire en mode hybride, à savoir Cap,h,0 avant l'instant $T_1$ puis à la rampe Cap,c,h(t) entre l'instant $T_1$ et l'instant $T_2$.

Entre l'instant $T_1$ et l'instant $T'_1$, on maintient le moyen de couplage/découplage complètement fermé. A l'instant $T'_1$, on démarre l'ouverture du moyen de couplage/découplage de telle sorte que cette ouverture soit complètement réalisée à l'instant $T_2$. Le couple maximal transmissible Cemb(t) passe alors de la valeur maximale Cemb,f à l'instant $T'_1$, à zéro à l'instant $T_2$. Le premier moteur est en permanence piloté en couple. Jusqu'à l'instant $T_2$, le deuxième moteur est également piloté en couple. Au-delà de l'instant $T_2$, le deuxième moteur qui ne transmet plus aucun couple à l'arbre primaire puisque le moyen de couplage/découplage est complètement ouvert, peut aussi bien être piloté en couple qu'en régime.

Pendant tout le processus d'ouverture, le couple maximum transmissible par le moyen de couplage/découplage est toujours supérieur à la consigne de couple à fournir par le deuxième moteur Cmot2, cons(t), de telle sorte que le couple transmis par le moyen de couplage/découplage est toujours égal au couple fourni par le deuxième moteur qui reste en permanence synchronisé avec l'arbre primaire. En fin du processus d'ouverture, les moteurs sont brutalement découplés de telle sorte que le couple transmis à l'arbre primaire passe brutalement de la valeur correspondant au couple de décélération naturelle en mode hybride au couple de décélération naturelle en mode découplé. Ce saut brutal de couple pour l'arbre primaire permet d'absorber l'incidence de la différence d'inertie vue par l'arbre primaire au moment du découplage. En effet, tant que les deux moteurs sont couplés, c'est-à-dire tant qu'ils sont synchronisés, l'inertie entraînée vue par l'arbre primaire pour le groupe moteur correspond à la somme des inerties du premier moteur et du deuxième moteur, alors que, après découplage, l'inertie du groupe moteur entraîné par l'arbre primaire est égale simplement à l'inertie du premier moteur.

On va maintenant décrire le processus de couplage pendant la phase de reprise après le changement du rapport de la boîte de vitesses.

Comme dans le cas précédent, on définit des couples naturels de décélération pour l'arbre primaire en mode hybride et en mode découplé qui sont identiques au couple naturel de décélération qui ont été définis pour la phase d'annulation. On définit également des consignes de couple de l'arbre primaire optimaux en mode hybride et en mode découplé visés après la phase de reprise après le changement du rapport de la boîte de vitesses, Cap,c,h et Cap,c,1, respectivement, appelées aussi consignes de référence en mode hybride ou découplé. Ces valeurs visées pour la consigne de couple à fournir à l'arbre primaire sont définies par l'ordinateur de supervision. Comme dans le cas précédent, on définit des rampes de passage du couple de décélération naturelle au couple optimal visé en mode hybride ou en mode découplé pendant la période de reprise, qui se déroulent entre l'instant $T_3$ du début de couplage et l'instant $T_4$ auquel on a atteint les consignes optimales de couple pour l'arbre primaire. Ces rampes sont appelées, respectivement, Cap,cons,h(t) et Cap,cons,1(t). Pour effectuer le couplage des deux moteurs, on maintient, pour le premier moteur, une consigne de couple Cmot1, cons (t) égale au couple de décélération naturelle en mode découplé au moins jusqu'à l'instant $T''_3$ instant auquel le couple transmis à l'arbre primaire est égal au couple optimal transmis après reprise. Pendant toute cette période; à partir d'un instant $T_3$ et jusqu'à un instant $T'_3$ qui précède l'instant $T''_3$, on effectue progressivement la fermeture du moyen de couplage/découplage de façon à ce que la somme du couple fourni par le premier moteur et le couple maximal transmis par le moyen de couplage/découplage soit égale à la consigne de couple à transmettre à l'arbre primaire, conformément à la rampe qui permet de faire passer du couple de décélération naturelle au couple optimal visé en mode découplé Cap,cons, 1(t). Pendant cette période, on pilote le deuxième moteur en mode régime de façon à faire en sorte qu'à l'instant $T'_3$, la vitesse de rotation du deuxième moteur soit égale à la vitesse de rotation de l'arbre primaire, ce qui correspond à un accostage suivant une trajectoire de régime à incidence tangentielle. A l'instant $T'_3$, on ferme brutalement le moyen de couplage/découplage si bien qu'à partir de cet instant, le deuxième moteur et le premier moteur sont complètement couplés. Simultanément, on fait basculer le mode de pilotage du deuxième moteur du mode de pilotage en régime au mode de pilotage en couple et on fait suivre au deuxième moteur une consigne de variation du couple Cmot2,cons(t) qui soit telle que la somme du couple fourni par le deuxième moteur et le couple fourni par le premier moteur suivent la loi de passage du couple pour l'arbre primaire de la valeur du couple de décélération naturelle à la valeur du couple optimale visée après couplage, conformément à la loi de variation en mode hybride Cap,cons,h(t). Au-delà de l'instant $T''_2$, on continue à faire évoluer le couple du premier moteur et le couple du deuxième moteur de façon à ce que le couple transmis à l'arbre primaire reste constant et corresponde à la valeur visée pour l'arbre primaire en mode hybride et pour que le couple fourni par le premier moteur et le couple fourni par le deuxième moteur deviennent progressivement égaux aux valeurs optimales pour ces deux moteurs qui conduisent à l'utilisation optimale du groupe moteur.

Du fait de ce mode de fonctionnement, à l'instant $T'_3$ qui correspond au moment de fermeture brutale du moyen de couplage/découplage, c'est-à-dire au moment où on passe d'un mode de fonctionnement découplé à un mode de fonctionnement couplé, la consigne de couple pour l'arbre primaire passe brutalement de la valeur qui correspond au mode de fonctionnement découplé à la valeur correspondant au mode de fonctionnement hybride, ce qui permet d'absorber les conséquences du changement de la variation brutale d'inertie que doit entraîner l'arbre primaire.

Avec de telles lois de pilotage des groupes moteurs pour assurer le découplage pendant la phase d'annulation et le couplage pendant la phase de reprise, le changement de rapport de boîte de vitesses se fait de façon transparente pour l'utilisateur.

## Revendications

1. Procédé pour piloter le couplage et le découplage du premier moteur et du deuxième moteur d'un groupe motopropulseur hybride parallèle, du type comprenant un premier moteur (11) entraînant un arbre primaire (14) en entrée d'une boîte de vitesses (15), un deuxième moteur (12) et un moyen de couplage/découplage (13) du deuxième moteur et du premier moteur, manoeuvrable entre une position d'ouverture et une position de fermeture, pour permettre un changement de rapport de la boîte de vitesses lorsque le groupe motopropulseur fonctionne en mode hybride, selon lequel on pilote le groupe motopropulseur pour découpler le deuxième moteur et le premier moteur selon des lois de commande comportant une consigne de couple pour l'arbre primaire, puis changer le rapport de la boîte de vitesses, et coupler à nouveau le deuxième moteur et le premier moteur, **caractérisé en ce que** pour la période qui précède le début de découplage :

   - on définit pour le groupe motopropulseur, une consigne de couple de référence à transmettre à l'arbre primaire lorsque les deux moteurs sont couplés, (Cap,c,h), et une consigne de couple de référence à transmettre à l'arbre primaire (14) lorsque les deux moteurs (12, 13) sont découplés (Cap,c,1) ; ces deux consignes devant conduire au même comportement du véhicule ;
   - on définit pour le groupe motopropulseur, un couple de décélération naturel lorsque les moteurs sont couplés, (Cap,nat, h), et un couple de décélération naturel lorsque les moteurs sont découplés (Cap,nat,1) ; ces deux couples étant déterminés en fonction du couple résistant (Cap, res), auquel est soumis l'arbre primaire (14) et des inerties qu'il doit entraîner lorsque les moteurs (12, 13) sont couplés et découplés ; puis, à partir des ces consignes (Cap,c,h et Cap,c,1) et de ces couples Cap,nat,h et Cap,nat,1) :
   - on définit une première loi de passage assurant le passage entre le couple de référence à transmettre à l'arbre primaire lorsque les moteurs sont couplés (Cap,c,h), et le couple de décélération naturel lorsque les moteurs sont couplés, (Cap,nat,h), pour le couplage, et inversement pour le découplage (Cap,cons,h(t)),
   - on définit une deuxième loi assurant le passage entre le couple de référence à transmettre à l'arbre primaire lorsque les moteurs sont découplés, (Cap,c, 1), et le couple de décélération naturel lorsque les moteurs sont découplés, (Cap, nat,1), pour le couplage, et inversement pour le découplage (Cap, cons,l(t)),

   et **en ce que** :

   pendant le couplage ou le découplage,

   - on pilote le groupe motopropulseur pour transmettre à l'arbre primaire un couple qui suit la loi de passage correspondant au mode de fonctionnement de départ du groupe motopropulseur jusqu'au moment où le mode de fonctionnement du groupe motopropulseur change et on pilote alors le groupe motopropulseur pour transmettre à l'arbre primaire un couple qui suit la loi de passage correspondant au mode de fonctionnement d'arrivée du groupe motopropulseur de telle sorte que lors du couplage et lors du découplage, la consigne de couple pour l'arbre primaire comporte une discontinuité choisie pour compenser l'écart entre l'inertie entraînée par l'arbre primaire lorsque le deuxième moteur est couplé au premier moteur et l'inertie entraînée par l'arbre primaire lorsque le deuxième moteur est découplé du premier moteur afin d'éviter toute variation brutale d'accélération de l'arbre primaire entraîné par le groupe motopropulseur au moment du découplage ou du couplage.

2. Procédé selon la revendication 1, **caractérisé en ce que** pour le découplage, le moment de changement de mode de fonctionnement du groupe motopropulseur est la fin de l'ouverture des moyens (13) de couplage/découplage et, pour le couplage, le moment (T2, T3) de changement du mode fonctionnement du groupe motopropulseur est la fin de fermeture du moyen du couplage/découplage

3. Procédé selon la revendication 1 ou 2, **caractérisé en ce qu'**en permanence, on pilote en couple le premier moteur (11), on pilote en couple le deuxième moteur (12) lorsqu'il est couplé et on le pilote en régime lorsqu'il est découplé ou en cours de couplage, et on pilote en couple le moyen (13) de couplage/découplage, de telle sorte que le couple transmis l'arbre primaire (14), égal à la somme du couple du premier moteur et du couple maximal transmissible par le moyen de couplage/découplage, lorsque le deuxième moteur n'est pas couplé ou du couple du deuxième moteur lorsque le deuxième moteur est couplé, soit égal à chaque instant à la consigne de couple pour l'arbre primaire défini pour le passage du couplage au découplage ou inversement.

4. Procédé selon la revendication 3, **caractérisé en ce que** pour le découplage, pendant une première période pendant laquelle les deux moteurs sont couplés, on réduit la consigne de couple du premier moteur (11) pour l'amener à la valeur correspondant au couple de décélération naturel lorsque les moteurs sont découplés (Cap,nat,1), puis on maintient la consigne de couple pour le premier moteur et on démarre l'ouverture du moyen (13) de couplage/découplage, on effectue l'ouverture du moyen de couplage/découplage, tout en pilotant le deuxième moteur (12) pour que le couple transmis à l'arbre primaire suive la loi correspondant au couplage des moteurs.

**5.** Procédé selon la revendication 3, **caractérisé en ce que** pour effectuer le couplage, on maintient la consigne de couple du premier moteur (11), on démarre la fermeture du moyen (13) de couplage/découplage et on le ferme progressivement, simultanément, on pilote en régime le deuxième moteur (12) pour assurer un accostage tangentiel du moyen de couplage/découplage, et, dès que l'accostage tangentiel est réalisé, on fait basculer la consigne de couple de l'arbre primaire (14) de la loi correspondant aux moteurs découplés à la loi correspondant aux moteurs couplés, et on fait basculer le mode de pilotage du deuxième moteur (12), du mode de pilotage en régime au mode de pilotage en couple.

**6.** Procédé selon l'une quelconque des revendications 1 à 5, **caractérisé en ce que** le premier moteur (11) est une machine électrique, le deuxième moteur (12) est un moteur thermique et le moyen (13) de couplage/découplage est un embrayage commandé.

**7.** Procédé selon la revendication 6, **caractérisé en ce que** le groupe moteur est un groupe motopropulseur hybride d'un véhicule automobile.

**8.** Groupe motopropulseur hybride du type comportant un premier moteur, un deuxième moteur et un moyen de couplage/découplage, **caractérisé en ce qu'**il comporte un moyen de pilotage (21, 22, 23, 24) mettant en oeuvre le procédé selon l'une quelconque des revendications 1 à 7.

**9.** Groupe motopropulseur selon la revendication 8, **caractérisé en ce qu'**il entraîne la boîte de vitesses d'une automobile sur lequel il est monté.

**Claims**

**1.** A method for controlling the coupling and the decoupling of the first motor and second motor of a parallel hybrid motive power group, of the type comprising a first motor (11) entraining a primary shaft (14) at the entry of a gearbox (15), a second motor (12) and a coupling/decoupling means (13) of the second motor and of the first motor, manoeuvrable between an open position and a closed position, to permit a change of ratio of the gearbox when the motive power group operates in hybrid mode, according to which the motive power group is controlled for decoupling the second motor and the first motor according to the control patterns comprising a torque setpoint for the primary shaft, then changing the ratio of the gearbox, and coupling again the second motor and the first motor, **characterized in that** for the period which precedes the start of decoupling:

- for the motive power group, a reference torque setpoint is defined to be transmitted to the primary shaft when the two motors are coupled, (Cap,c,h), and a reference torque setpoint to be transmitted to the primary shaft (14) when the two motors (12, 13) are decoupled (Cap,c,1); these two setpoints having to lead to the same performance of the vehicle;
- for the motive power group, a natural deceleration torque is defined when the motors are coupled, (Cap,nat,h), and a natural deceleration torque when the motors are decoupled (Cap,nat,1); these two torques being determined as a function of the resistant torque (Cap, res), to which the primary shaft (14) is subjected, and of the inertias which it must entrain when the motors (12, 13) are coupled and decoupled;

then, from these setpoints (Cap,c,h and Cap,c,1) and from these torques (Cap,nat,h and Cap,nat,1):

- a first shift pattern is defined, ensuring the passage between the reference torque to be transmitted to the primary shaft when the motors are coupled (Cap,c,h), and the natural deceleration torque when the motors are coupled, (Cap,nat,h), for the coupling, and inversely for the decoupling (Cap,cons,h(t)),
- a second pattern is defined, ensuring the passage between the reference torque to be transmitted to the primary shaft when the motors are decoupled, (Cap,c,1), and the natural deceleration torque when the motors are decoupled, (Cap,nat,1), for the coupling, and inversely for the decoupling (Cap,cons,I(t)),

and **in that**:

during the coupling or the decoupling,

- the motive power group is controlled to transmit to the primary shaft a torque which follows the shift pattern corresponding to the departure mode of operation of the motive power group up to the moment where the mode of operation of the motive power group changes and the motive power group is then controlled to transmit to the primary shaft a torque which follows the shift pattern corresponding to the arrival mode of operation of the motive power group such that on coupling and on decoupling, the torque setpoint for the primary shaft comprises a discontinuity selected to compensate for the difference between the inertia produced by the primary shaft when the second motor is coupled to the first motor and the inertia produced by the primary shaft when the second motor is decoupled from the first motor so as to avoid any sudden variation in acceleration of the primary shaft entrained by the motive power group at the moment of decoupling or coupling.

2. The method according to Claim 1, **characterized in that** for the decoupling, the moment of change of mode of operation of the motive power group is the end of the opening of the coupling/decoupling means (13) and, for coupling, the moment (T2, T3) of change of mode of operation of the motive power group is the end of closure of the coupling/decoupling means.

3. The method according to Claim 1 or 2, **characterized in that** constantly the first motor (11) is controlled in couple, the second motor (12) is controlled in couple, when it is coupled and it is controlled running when it is decoupled or in the course of coupling, and the coupling/decoupling means (13) is controlled in couple, such that the torque transmitted to the primary shaft (14), equal to the sum of the torque of the first motor and of the maximum torque transmissible by the coupling/decoupling means, when the second motor is not coupled or of the torque of the second motor when the second motor is coupled, is equal at each moment to the torque setpoint for the primary shaft defined for the passage from coupling to decoupling or inversely.

4. The method according to Claim 3, **characterized in that** for the decoupling, during a first period during which the two motors are coupled, the torque setpoint of the first motor (11) is reduced to bring it to the value corresponding to the natural deceleration torque when the motors are decoupled (Cap,nat,1), then the torque setpoint is maintained for the first motor and the open of the coupling/decoupling means (13) is started, the opening of the coupling/decoupling means is carried out, whilst controlling the second motor (12) so that the torque transmitted to the primary shaft follows the pattern corresponding to the coupling of the motors.

5. The method according to Claim 3, **characterized in that** to carry out the coupling, the torque setpoint of the first motor (11) is maintained, the closure of the coupling/decoupling means (13) is started and it is closed progressively, simultaneously the second motor (12) is controlled running to ensure a tangential mating of the coupling/decoupling means, and, as soon as the tangential mating is realized, the clutch setpoint of the primary shaft (14) of the pattern corresponding to the decoupled motors is caused to swing to the pattern corresponding to the coupled motors, and the mode of controlling of the second motor (12) is caused to swing from the mode of controlling running to the mode of controlling in couple.

6. The method according to any of Claims 1 to 5, **characterized in that** the first motor (11) is an electric machine, the second motor (12) is a thermic motor and the coupling/uncoupling means (13) is a controlled clutch.

7. The method according to Claim 6, **characterized in that** the motor group is a hybrid motive power group of an automobile.

8. A hybrid motive power group of the type comprising a first motor, a second motor and a coupling/decoupling means, **characterized in that** it comprises a controlling means (21, 22, 23, 24) implementing the method according to any of Claims 1 to 7.

9. The motive power group according to Claim 8, **characterized in that** it entrains the gearbox of an automobile on which it is mounted.

**Patentansprüche**

1. Verfahren zum Steuern des Kuppelns und Abkuppelns des ersten Motors und des zweiten Motors eines hybriden parallelen Antriebsaggregats des Typs, das einen ersten Motor (11) aufweist, der eine Primärwelle (14) am Eingang eines Schaltgetriebes (15) antreibt, einen zweiten Motor (12) und ein Kuppel-/Abkuppelmittel (13) des zweiten Motors und des ersten Motors, bedienbar zwischen einer Öffnungsposition und einer Schließposition, um ein Gangwechseln des Schaltgetriebes zu erlauben, wenn das Antriebsaggregat im hybriden Modus funktioniert, gemäß dem man das Antriebsaggregat steuert, um den zweiten Motor und den ersten Motor gemäß Steuergesetzen abzukuppeln, die einen Momentsollwert für die Hauptwelle aufweisen, dann den Gang des Schaltgetriebes zu wechseln und den zweiten Motor und den ersten Motor wieder zu kuppeln, **dadurch gekennzeichnet, dass** man für die Periode, die dem Abkuppelbeginn vorausgeht:

- für das Antriebsaggregat einen Bezugsmomentsollwert definiert, der an die Hauptwelle zu übertragen ist, wenn die zwei Motor gekuppelt sind, (Cap, c, h), und einen Bezugssollwert, der an die Hauptwelle (14) zu übertragen ist, wenn die zwei Motoren (12, 13) abgekuppelt sind (Cap, c, 1); wobei diese zwei Sollwerte zu einem gleichen Verhalten des Fahrzeugs führen müssen,

- für das Antriebsaggregat ein natürliches Bremsmoment definiert, wenn die Motoren gekuppelt sind, (Cap, nat, h), und ein natürliches Bremsmoment, wenn die Motoren abgekuppelt sind (Cap, nat, 1); wobei diese zwei Momente in Abhängigkeit von dem Widerstandsmoment (Cap, res) bestimmt werden, dem die Hauptwelle (14) unterworfen wird, und von den Trägheiten, die sie antreiben soll, wenn die Motoren (12, 13) gekuppelt und abgekuppelt sind;

man dann, ausgehend von diesen Sollwerten (Cap, c, h und Cap, c, 1) und von diesen Momenten (Cap, nat, h und Cap, nat, 1):

- ein erstes Übergangsgesetz definiert, das das Übergehen von dem Bezugsmoment, das an die Hauptwelle zu übertragen ist, wenn die Motoren gekuppelt sind (Cap, c, h), auf das natürliche Bremsmoment, wenn die Motoren gekuppelt sind, (Cap, nat, h), für das Kuppeln und umgekehrt für das Abkuppeln (Cap, cons, h(t)), sicherstellt,
- ein zweites Gesetz definiert, das das Übergehen von dem Bezugsmoment, das an die Hauptwelle zu übertragen ist, wenn die Motoren abgekuppelt sind, (Cap, c, 1), auf das natürliche Bremsmoment, wenn die Motoren abgekuppelt sind, (Cap, nat, 1), für das Kuppeln und umgekehrt für das Abkuppeln (Cap, cons, 1(g)), sicherstellt,

und dadurch, dass:

man während des Kuppelns oder des Abkuppelns

- das Antriebsaggregat steuert, um an die Hauptwelle ein Moment zu übertragen, das dem Übergangsgesetz, das der Ausgangsbetriebsart des Antriebsaggregats entspricht, bis zu dem Moment folgt, in dem die Betriebsart des Antriebsaggregats wechselt und man dann das Antriebsaggregat steuert, um an die Hauptwelle ein Moment zu übertragen, das dem Übergangsgesetz, das der Ankunftsbetriebsart des Antriebsaggregats entspricht, derart folgt, dass beim Kuppeln und Abkuppeln der Momentsollwert für die Hauptwelle eine ausgewählte Diskontinuität aufweist, um den Unterschied zwischen der Trägheit, die von der Hauptwelle angetrieben wird, wenn der zweite Motor an den ersten Motor gekuppelt ist, und der Trägheit, die von der Hauptwelle angetrieben wird, wenn der zweite Motor von dem ersten Motor abgekuppelt ist, ausgeglichen wird, um jede plötzliche Beschleunigungsschwankung der von dem Antriebsaggregat angetriebenen Hauptwelle im Augenblick des Abkuppelns oder Kuppelns zu vermeiden.

2. Verfahren nach Anspruch 1, **dadurch gekennzeichnet, dass** der Augenblick des Betriebsartenwechsels des Antriebsaggregats für das Abkuppeln das Ende des Öffnens der Kuppel-/Abkuppelmittel (13) ist, und für das Kuppeln der Augenblick (T2, T3) des Betriebsartenwechsels des Antriebsaggregats das Ende des Schließens des Kuppel-/Abkuppelmittels ist.

3. Verfahren nach Anspruch 1 oder 2, **dadurch gekennzeichnet, dass** man ständig das Moment des ersten Motors (11) steuert, und das Moment des zweiten Motors (12) steuert, wenn er gekuppelt ist, und man die Drehzahl steuert, wenn er abgekuppelt ist oder im Abkuppeln begriffen ist, und man das Moment des Kuppel-/Abkuppelmittels (13) derart steuert, dass das an die Hauptwelle (14) übertragene Moment, gleich der Summe des Moments des ersten Motors und des maximal von dem Kuppel-/Abkuppelmoments übertragbaren Moments, wenn der zweite Motor nicht gekuppelt ist, oder des Moments des zweiten Motors, wenn der zweite Motor gekuppelt ist, in jedem Augenblick gleich dem Momentsollwert für die Hauptwelle ist, der für das Übergehen vom Kuppeln zu Abkuppeln und umgekehrt definiert ist.

4. Verfahren nach Anspruch 3, **dadurch gekennzeichnet, dass** man für das Abkuppeln, während einer ersten Periode, während der die zwei Motoren gekuppelt sind, den Momentsollwert des ersten Motors (11) verringert, um ihn auf den Wert zu bringen, der dem natürlichen Bremsmoment entspricht, wenn die Motoren abgekuppelt sind (Cap, nat, 1), und man dann den Momentsollwert für den ersten Motor aufrecht erhält und das Öffnen des Kuppel-/Abkuppelmittels (13) startet, man das Öffnen des Kuppel-/Abkuppelmittels ausführt und gleichzeitig den zweiten Motor (12) steuert, so dass das an die Hauptwelle übertragene Moment dem Gesetz, das dem Kuppeln der Motoren entspricht, folgt.

5. Verfahren nach Anspruch 3, **dadurch gekennzeichnet, dass** man zum Ausführen des Kuppelns den Momentsollwert des ersten Motors (11) aufrecht erhält, man das Schließen des Kuppel-/Abkuppelmittels (13) startet und man es allmählich schließt und gleichzeitig die Drehzahl des zweiten Motors (12) steuert, um ein tangentiales Andocken des Kuppel-/Abkuppelmittels sicherzustellen, und, sobald das tangentiale Andocken ausgeführt ist, man den Momentsollwert der Hauptwelle (14) von dem Moment, das den abgekuppelten Motoren entspricht, auf das Gesetz, das den gekuppelten Motoren entspricht, umstellt, und man den Steuermodus des zweiten Motors (12) von dem Drehzahlsteuermodus auf den Momentsteuermodus umstellt.

6. Verfahren nach einem der Ansprüche 1 bis 5, **dadurch gekennzeichnet, dass** der erste Motor (11) eine elektrische Maschine ist, der zweite Motor (12) eine Verbrennungsmaschine ist, und das Kuppel-/Abkuppelmittel (13) eine gesteuerte Kupplung ist.

7. Verfahren nach Anspruch 6, **dadurch gekennzeichnet, dass** das Antriebsaggregat ein hybrides Antriebsaggregat eines Kraftfahrzeugs ist.

8. Hybrides Antriebsaggregat des Typs, das einen ersten Motor, einen zweiten Motor und ein Kuppel-/Abkuppelmittel aufweist, **dadurch gekennzeichnet, dass** es ein Steuermittel (21, 22, 23, 24) aufweist, das das Verfahren nach einem der Ansprüche 1 bis 7 umsetzt.

9. Antriebsaggregat nach Anspruch 8, **dadurch gekennzeichnet, dass** es das Schaltgetriebe eines Kraftfahrzeugs, auf das es montiert ist, antreibt.

FIG.1

Couple arbre
primaire

Cap, op, h

Cap, h, 0

Cap, nat

0  |  1  |  2  |  3  |  4  t (s)
   T1    T2    T3    T4

**FIG.2**

Cemb

Cmot2, c

Cap, h, 0

Cap, 1, 0

Cemb(t)

Cap, c, h(t)

Cap, c, 1(t)

Cap, nat, 1
Cap, nat, h
Cmot1, c

t0  T1    T'1    T2

Cmot1, cons(t)

τ

t (s)

**FIG.3**

FIG.4

**EP 1 896 281 B1**

## RÉFÉRENCES CITÉES DANS LA DESCRIPTION

**Documents brevets cités dans la description**

- US 20030109357 A